# FASCICULE DE BREVET EUROPEEN

(11) **EP 3 009 826 B1**
(45) Date de publication et mention de la délivrance du brevet: **18.12.2019**
(21) Numéro de dépôt: 15185500.4
(22) Date de dépôt: 16.09.2015
(51) Int. Cl.: G01M 15/02, C08L 83/04, F01D 25/28, G01M 15/14

(54) **CAPOT MOTEUR ISOLANT POUR TEST DE TURBOMACHINE SUR BANC D'ESSAIS**
ISOLIERENDE MOTORSCHUTZUMMANTELUNG FÜR TEST EINER TURBOMASCHINE AUF EINER PRÜFBANK
INSULATING TEST ENGINE HOOD FOR A TURBINE ENGINE ON A TEST BENCH

(30) Priorité: 15.10.2014 BE 201400767
(43) Date de publication de la demande: 20.04.2016
(73) Titulaire: Safran Aero Boosters SA, 4041 Herstal (BE)
(72) Inventeur: TRAN, Quac Hung, 4020 Liège (BE); CROES, Pierre, 1380 Ohain (BE); NOELMANS, Aurore, 4130 Esneux (BE)
(74) Mandataire: Lecomte & Partners

(56) Documents cités:
- EP-A1- 1 619 489
- US-A1- 2012 167 664
- US-B1- 8 161 806

## Description

### Domaine technique

L'invention a trait au domaine des tests des turbomachines sur banc d'essais au sol. Plus précisément, l'invention a trait à un capot dédié aux tests de turbomachines installées sur un banc d'essais statique. L'invention a également trait à un procédé de test d'une turbomachine sur un banc d'essais au sol.

### Technique antérieure

Le passage au banc d'essais intervient à différentes étapes de la vie d'une turbomachine. En effet, les phases de tests sont nécessaires à la fois lors de la conception, lors de la maintenance ou lors de réparations suite à une dégradation de la turbomachine. Ces tests permettent de valider la conception et de contrôler le fonctionnement, les réglages de turbomachines.

Généralement ces essais se déroulent au sol, sur des installations fixes supportant la turbomachine et résistant à sa poussée. Un capot moteur spécifique pour les tests est employé à cette occasion, et remplace le capot moteur de la turbomachine employé en conditions réelles de vol.

Le document EP1619489A1 divulgue un équipement pour essais de développement au sol d'un turboréacteur. Lors des phases de test, le flux primaire emprunte un passage annulaire délimité par une tuyère et un cône de tuyère fictif qui remplace le cône central normal du turboréacteur. Ce cône de tuyère fictif présente une paroi circulaire entourant une partie centrale de la turbomachine. Or, la chaleur lors du test peut dégrader la turbomachine ou les équipements pour essais eux-mêmes. Une autre méthode de test d'une turbomachine est divulgué dans le document US2012/0167664.

Bien que les bancs d'essais permettent de simuler physiquement certaines conditions de vol, ils n'ont pas la capacité de reproduire exactement la température de l'environnement en altitude, ni d'assurer une ventilation similaire aux conditions de vol. Par ailleurs, la ventilation peut également se voir dégradé par les formes du capot de test, ce qui génère un échauffement de l'espace entre la turbomachine et le capot de test, et qui pourrait dégrader ce dernier ou certains composants.

### Résumé de l'invention

### Problème technique

L'invention a pour objectif de résoudre au moins un des problèmes posés par l'art antérieur. Plus précisément, l'invention a pour objectif de réduire les conséquences de réchauffement de la turbomachine lors de tests sur un banc d'essais au sol.

### Solution technique

L'invention a pour objet un capot moteur de test de turbomachine, destiné à remplacer un capot moteur de vol de la turbomachine lors d'un test de la turbomachine sur un banc d'essai, le capot de test comprenant une paroi avec une surface externe destinée à délimiter un flux annulaire de la turbomachine et une surface interne opposée à la surface externe, remarquable en ce qu'il comprend en outre une couche de silicone recouvrant la surface interne de la paroi adaptée pour isoler thermiquement la paroi.

Selon un mode avantageux de l'invention, la paroi est réalisée en un matériau composite à matrice organique telle une matrice époxydique.

Selon un mode avantageux de l'invention, le matériau composite comprend des fibres de carbone et/ou des fibres de verre, éventuellement le matériau composite comprend une préforme stratifiée avec un empilement de plis fibreux avec des plis de fibres de verre et des plis de fibres de carbone.

Selon un mode avantageux de l'invention, la couche de silicone recouvre la majorité de la paroi, préférentiellement la paroi est totalement recouverte, éventuellement par la couche de silicone.

Selon un mode avantageux de l'invention, la couche de silicone comprend au moins 30% préférentiellement au moins 50% en masse de polysiloxane.

Selon un mode avantageux de l'invention, la couche de silicone comprend du quartz, éventuellement moins de 20% massique.

Selon un mode avantageux de l'invention, la couche de silicone comprend des réticulants, éventuellement entre 2% et 20%.

Selon un mode avantageux de l'invention, la paroi est circulaire et est formée de deux demi-coquilles, le carter comprenant des brides axiales de fixation rapportées destinées à être fixées l'une à l'autre, où la paroi est formée d'un seul tenant ; éventuellement la paroi ou chaque demi-coquille est venue de matière.

Selon un mode avantageux de l'invention, le capot de test comprend des raccords électriques, tels des fils électriques, traversant ou contournant radialement la paroi, éventuellement les raccords électriques s'étendent entre la paroi et la couche de silicone.

Selon un mode avantageux de l'invention, le capot de test comprend des capteurs, tels des capteurs de pression et/ou des capteurs de température, préférentiellement les capteurs sont en contact de la couche de silicone.

Selon un mode avantageux de l'invention, le capot de test comprend une bride circulaire ou en arc de cercle à chaque extrémité amont et aval de la paroi, préférentiellement au moins une ou chaque bride est réalisée en métal et est fixée à la paroi à l'aide d'axes de fixation s'étendant éventuellement radialement vers l'intérieur.

Selon un mode avantageux de l'invention, au moins une ou chaque bride comprend une première portion circulaire ou en arc de cercle qui épouse la surface interne de la paroi, et une deuxième portion circulaire ou en arc de cercle qui prolonge la paroi en affleurant la surface externe de la paroi de sorte à guider le flux annulaire de la turbomachine.

Selon un mode avantageux de l'invention, la couche de silicone présente une épaisseur comprise entre 1,00 mm et 10,00 mm, préférentiellement comprise entre 3,00 mm et 6,00 mm.

Selon un mode avantageux de l'invention, la surface interne et la surface externe sont des surfaces opposées selon l'épaisseur de la paroi.

Selon un mode avantageux de l'invention, la couche de silicone est délimitée par les brides du capot.

Selon un mode avantageux de l'invention, la couche de silicone est disposée entre la paroi et au moins un ou chaque capteur.

Selon un mode avantageux de l'invention, chaque bride de fixation délimite axialement la paroi.

Selon un mode avantageux de l'invention, les brides axiales s'étendent radialement vers l'extérieur de la paroi, éventuellement depuis la surface externe de la paroi.

Selon un mode avantageux de l'invention, la paroi présente une épaisseur supérieure à 4,00 mm, préférentiellement supérieure à 6,00 mm, plus préférentiellement supérieure à 8,00 mm, éventuellement supérieure à 10,00 mm ou 15,00 mm. L'importance de l'épaisseur de la paroi a pour effet d'augmenter sa robustesse, ce qui offre l'avantage de pouvoir y fixer des équipements de test ou de mieux résister aux vibrations. Cette épaisseur autorise d'y effectuer des perçages pour créer des points d'ancrage.

Selon un mode avantageux de l'invention, la couche de silicone et/ou la paroi présente une/des épaisseur(s) constante(s).

L'invention a également pour objet un procédé de test d'une turbomachine sur un banc d'essais, notamment d'un turboréacteur ou d'un turbopropulseur, le procédé comprenant les étapes suivantes : (b) montage d'un capot moteur de test sur la turbomachine, le capot de test comprenant une paroi avec une surface interne entourant la turbomachine; (c) fixation de la turbomachine sur le banc d'essais ; (d) test de la turbomachine sur le banc d'essais ; remarquable en ce que le capot de test comprend une couche de silicone recouvrant la surface interne de la paroi adaptée pour isoler thermiquement la paroi.

Selon un mode avantageux de l'invention, lors de l'étape (c) fixation de la turbomachine, le capot de test est fixé au banc d'essais, éventuellement le banc d'essais comprend un adaptateur avec des moyens de fixation qui coopèrent avec le capot de test.

Selon un mode avantageux de l'invention, le capot de test comprend une bride circulaire ou en arc de cercle à chaque extrémité amont et aval de la paroi, lors de l'étape (b) montage du capot de test au moins une ou chaque bride circulaire ou en arc de cercle vient en contact, éventuellement circulaire, de la turbomachine.

Selon un mode avantageux de l'invention, lors de l'étape (b) montage du capot de test, la couche de silicone entoure la turbomachine sur la majorité de la longueur axiale de la paroi, préférentiellement sur toute sa longueur.

Selon un mode avantageux de l'invention, lors de l'étape (b) montage du capot de test le contact, éventuellement circulaire, d'au moins une ou de chaque bride est axial et/ou radial.

Selon un mode avantageux de l'invention, le procédé comprend une étape de démontage et/ou une étape de remontage du capot de vol de la turbomachine.

Selon un mode avantageux de l'invention, le capot de test est plus lourd que le capot de vol.

Selon un mode avantageux de l'invention, la paroi du capot de test est plus épaisse et/ou plus lourde que la paroi du capot de vol.

L'invention a également pour objet une utilisation du silicone pour isoler thermiquement la surface intérieure d'une paroi de capot moteur de test de turbomachine lors du test de la turbomachine sur un banc d'essais.

Selon un mode avantageux de l'invention, le silicone comprend au moins 30% préférentiellement au moins 50%, éventuellement au moins 70% en masse de polysiloxane.

Selon un mode avantageux de l'invention, le silicone forme une couche de silicone comprenant du quartz, éventuellement moins de 20% massique.

Selon un mode avantageux de l'invention, le silicone forme une couche de silicone comprenant des réticulants, éventuellement entre 2% et 20% massique.

### Avantages apportés

L'invention apporte un revêtement spécifique à la paroi. Elle permet de marier différents matériaux en exploitant les avantages spécifiques de chacun ; dont la résistance mécanique, et la résistance thermique, la capacité thermique du silicone. L'espace entre le carter et la turbomachine peut atteindre plus de 350°C sans que le carter ou ses carters ne soient véritablement en danger. La composition du silicone évite les phénomènes de gonflement et/ou de décollement de la paroi.

La surface interne de la paroi peut être totalement recouverte par la couche de silicone et optionnellement par les brides circulaires et/ou axiales. De la sorte, le carter, en particulier la paroi est dotée d'une barrière, d'un voile étanche ; d'une protection mécanique, chimique et thermique intégrale.

### Brève description des dessins

La figure 1 représente un banc d'essais pour une turbomachine axiale selon l'invention.
La figure 2 est une coupe d'une demi-coquille de carter de test selon l'invention.
La figure 3 est une coupe, suivant l'axe 3-3 tracé sur la figure 2, d'une demi-coquille de carter de test selon l'invention
La figure 4 illustre un diagramme du procédé de test d'une turbomachine selon l'invention.

### Description des modes de réalisation

Dans la description qui va suivre, les termes intérieur ou interne et extérieur ou externe renvoient à un positionnement par rapport à l'axe de rotation d'une turbomachine axiale.

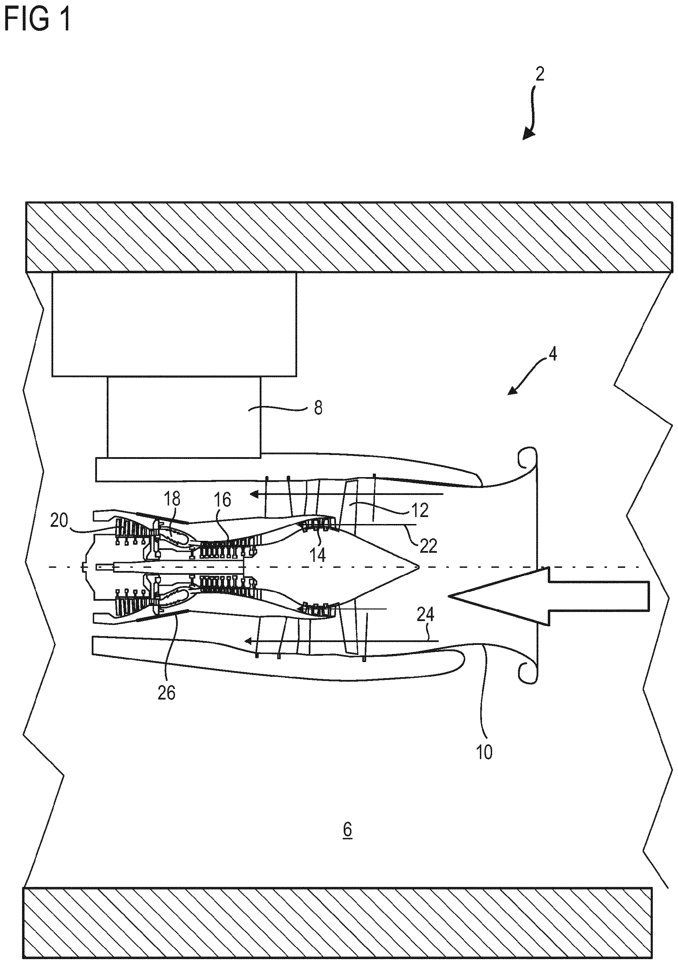

La figure 1 représente de manière simplifiée un banc d'essais 2 pour une turbomachine axiale 4, tel un turbopropulseur ou un turboréacteur, notamment un turboréacteur double-flux.

Le banc d'essais 2 peut être un banc d'essais au sol 2 qui est logé dans une construction comprenant un couloir 6 dans lequel est testée la turbomachine 4 ; seul un tronçon du couloir étant dessiné. Lors du test, la turbomachine 4 travaille avec l'air présent dans le couloir 6, en aspirant l'air en amont et en l'expulsant en aval. Des dispositifs peuvent permettre de modifier les conditions de test en injectant une bruine, en désaxant l'air en amont et en l'accélérant. Le banc d'essais 2 comprend un portique 8 ou adaptateur 8 auquel la turbomachine 4 est fixée en y étant suspendue ; à la manière de la fixation sous une aile d'avion. En option, une manche d'entrée 10 peut être ajoutée pour orienter, guider, homogénéiser le flux entrant dans la turbomachine.

Suivant une alternative de l'invention, le banc d'essais peut être en plein air et peut comprendre un pilier vertical fixé au sol. Le pilier est lui-même prolongé latéralement par une traverse horizontale. La traverse peut comprendre un bras descendant sur lequel est fixée la turbomachine ; le bras étant disposé à l'extrémité horizontale opposée au pilier.

La turbomachine comprend une soufflante 12, un premier niveau de compression 14, dit compresseur basse-pression 14, un deuxième niveau de compression 16, dit compresseur haute-pression 16, une chambre de combustion 18 et un ou plusieurs niveaux de turbines 20. En fonctionnement, la soufflante 12 génère un flux d'air qui se divise en un flux primaire 22 traversant les différents niveaux sus mentionnés de la turbomachine 4, et un flux secondaire 24 traversant un conduit annulaire le long de la machine pour ensuite rejoindre le flux primaire 22 en sortie de turbine 20. Les flux sont guidés par des carters moteurs, ou capots moteurs. Certains présentent des formes circulaires, annulaires, ou généralement tubulaires pour délimiter l'intérieur et l'extérieur du flux primaire 22, et du flux secondaire 24.

En vue d'effectuer un test, certains éléments de la turbomachine sont remplacés par des équipements de test. En particulier des capots moteurs de vol peuvent être remplacés par des capots moteurs de test 26, adaptés pour subir les conditions de test de la turbomachine 4. Un tel capot de test 26 peut être employé pour entourer la chambre de combustion 18 et/ou la turbine haute pression 20. Le capot 26 peut servir à délimiter l'intérieur du flux secondaire 24.

L'emploi d'un capot de test 26 offre d'autres avantages. Il permet d'utiliser un capot plus résistant mécaniquement et thermiquement, grâce entre autre à une épaisseur supérieure. En effet, un des buts des essais est de chercher les limites des turbomachines 4, au risque de produire un incident telle une perte d'une aube générant des vibrations de 100 g. D'autres incidents peuvent se produire, par exemple une rupture d'une conduite de prélèvement d'air chaud pouvant endommager certains équipements, ou une rupture d'un conduit de carburant pouvant ensuite provoquer un incendie. En cas de destruction, la perte du capot de test 26 est inférieure à la valeur du capot de vol puisque les contrôles y sont moindres ; et éventuellement les matériaux, les procédés de fabrication moins coûteux. Avantageusement, le capot de test 26 est conçu de sorte à être plus résistant que le capot de vol pour résister précisément aux incidents que l'on peut rencontrer lors de test. L'augmentation de l'épaisseur de sa paroi y facilite la fixation de capteurs ou de tout équipement nécessaire.

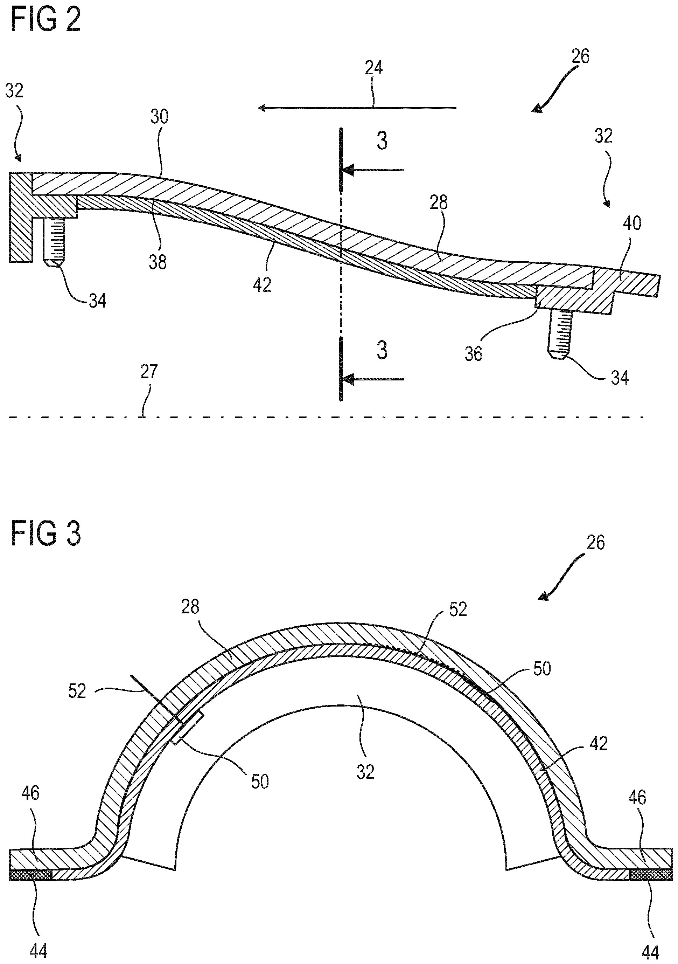

La figure 2 est une coupe de profil du capot moteur de test 26 représenté sur la figure 1. Le capot de test 26 peut être réalisé en deux demi-coquilles, seule l'une d'elle étant ici représentée. L'axe de rotation 27 de la turbomachine est illustré comme repaire.

Le capot de test 26 présente ici une forme circulaire. Il comporte une paroi 28 éventuellement circulaire, généralement tubulaire ou en forme d'ogive. La surface extérieure 30 du capot de test 26, et en particulier de sa paroi est identique à celle du capot de vol, c'est-à-dire celui qui est normalement monté sur la turbomachine lorsqu'elle entraîne un aéronef en vol.

Le capot de test 26 comprend au moins une bride circulaire 32 ou en forme d'arc de cercle. Chaque bride 32 est avantageusement métallique, en titane, en acier ou en aluminium ; le matériau étant choisi afin de renforcer, de rigidifier la paroi 28 tout en présentant une résistance à la chaleur. Cette résistance à la chaleur est importante car la bride 32 peut être proche ou en contact de la turbomachine au niveau de la chambre de combustion ou d'une turbine. Avantageusement, une bride 32 est disposée à chaque extrémité axiale de la paroi 28 en l'épousant selon une portion arquée. Les brides 32 sont fixées à l'aide d'axes 34 qui dépassent vers l'intérieur des brides et de la paroi 28.

Au moins une ou chaque bride 32 présente une forme de profilé dont le profil présente une première portion 36 qui épouse la surface interne 38 de la paroi 28, et une deuxième portion 40 qui prolonge la paroi 32. Eventuellement, la deuxième portion 40 affleure la surface externe 30 de la paroi; leurs surfaces externes respectives peuvent être tangentes et continues. De la sorte, la deuxième portion 40 peut contribuer à guider le flux secondaire 24 de la turbomachine, sans y créer de turbulences.

La paroi de test 28 peut être réalisée par moulage. Elle peut être réalisée en un matériau polymère, tel un matériau composite à matrice organique. Le matériau composite peut comprendre une préforme fibreuse avec un empilement de plis en fibres de carbone et/ou des plis en fibres de verre. Le moulage, tout comme l'aspect composite facilite la réalisation du capot 26, et en particulier de sa paroi 28. Le matériau ainsi que le procédé choisis simplifient la réalisation de courbes complexes sans augmenter les coûts. Ces choix offrent l'avantage de réaliser des surfaces très précises ; aussi précises que la surface externe du capot de vol. L'effet est de pouvoir réaliser un capot de test 26 fidèle à celui de vol, et de guider les flux de manière identique. Ainsi, la géométrie de test ne perturbe pas les conditions de test pour être le plus fidèle possible aux conditions réelles.

Le capot de test 26 comprend par ailleur une couche de silicone 42. La couche de silicone recouvre la surface interne 38 de la paroi 28, préférentiellement toute la surface, éventuellement toute la surface entre les brides circulaires ou en arc de cercle 32. La couche de silicone présente une épaisseur éventuellement constante. Son coefficient de conduction thermique peut être inférieur à celui du matériau de la paroi. La couche 42 peut encercler la chambre de combustion et la turbine haute pression, ou toute autre source de chaleur susceptible d'endommager la paroi 28. L'avantage ici est d'éviter les dégradations thermiques de la paroi 28. Le carter comprend une surface radialement interne qui est formée sur la couche de silicone 42. Cette couche 42 peut également former une protection mécanique contre des projections, des éclats provenant d'un compresseur, d'une turbine, ou de la chambre de combustion.

La couche de silicone 42 peut être appliquée par spray en plusieurs passage. La couche de silicone 42 peut présenter une épaisseur totale comprise entre 0,1 mm et 20 mm, éventuellement égale à 5 mm. Le silicone de la couche peut comprendre au moins 10%, préférentiellement au moins 30%, plus préférentiellement au moins 60% en masse de polysiloxane, éventuellement le polysiloxane est du polydiméthylsiloxane. La couche de silicone peut comprendre moins de 20% en masse de quartz (SiO2), et/ou entre 20% et 2% réticulants, et/ou moins de 2% en masse de méthyltriacétoxysilane, et/ou moins de 2% en masse d'éthyltriacétoxysilane. Un tel silicone est bien connue de l'homme du métier, le produit CAF8 de la société Bluestar Silicones France S.A.S. peut être employé.

La figure 3 représente une coupe du carter de test selon l'axe 3-3 tracé sur la figure 2. Une bride semi-circulaire aval 32 est représentée en arrière-plan.

Le carter de test 26 peut comprendre deux brides axiales de fixation rapportées 44, qui s'étendent selon le plan de séparation des demi-coquilles. Les brides rapportées 44 permettent de réunir les demi-coquilles par fixation grâce à des moyens de fixations spécifiques. Les brides rapportées 44 peuvent être métalliques, au même titre que les brides semi-circulaires 32. Le carter comprend des brides axiales 46 prolongeant radialement la paroi 28, et qui sont potentiellement venues de matière avec la paroi 28. Les brides rapportées 44 sont plaquées, fixées sur les brides axiales 46 du carter 26, et fixées l'une à l'autre. Elles peuvent délimiter la couche de silicone 42, de sorte à ce que la paroi 28 soit totalement recouverte d'une bride de fixation rapportée 44 à l'autre. En particulier, la couche silicone 42 peut recouvrir une bride 46 venue de matière avec la paroi.

Le carter de test 26 peut comprendre des capteurs 50 pour surveiller les conditions de fonctionnement de la turbomachine pendant les tests. Un thermomètre, tel un thermocouple, et un capteur de pression peuvent être intégrés. Au moins un ou chaque capteur 50 est en contact de la couche de silicone 42 qui forme un intercalaire entre le capteur et la paroi 28. Eventuellement, au moins un capteur 50 est recouvert par la couche de silicone 42. Des capteurs d'incendie supplémentaires peuvent être prévus. Le carter de test 26 permet donc d'intégrer des capteurs 50 là où un capot de vol ne peut en recevoir, l'avantage étant d'obtenir davantage de données de test, par exemple sur la chambre de combustion.

En complément, le capot de test 26 présente des branchements 52, des raccords électriques 52 pour les capteurs 50. Ces raccords 52 peuvent comprendre des fils ou des fiches traversant radialement la paroi 28. Il peut également s'agir de fils avec des gaines isolantes, thermiquement et électriquement, qui traversent la paroi ou la longent. Les fils peuvent être recouverts par la couche de silicone 42. La paroi 28 peut comprendre des orifices pour le passage des fils ; éventuellement les orifices sont rebouchés par la couche de silicone.

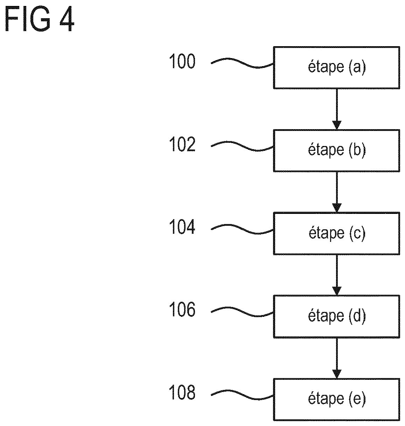

La figure 4 représente un procédé de test d'une turbomachine axiale avec un capot moteur de test qui peut être identique à celui décrit dans les figures précédentes. De même, la turbomachine testée peut correspondre à celle décrite en figure 1.

Le procédé peut comprendre l'enchaînement des étapes suivantes, éventuellement effectuées dans l'ordre qui suit :
(a) fourniture et/ou fabrication 100 d'une turbomachine à tester, tel un turbopropulseur double flux ou triple flux, un turboréacteur ;
(b) montage 102 d'un capot moteur de test sur la turbomachine, le capot de test comprenant une paroi avec une surface interne entourant la turbomachine ;
(c) fixation 104 de la turbomachine sur le banc d'essais ;
(d) test 106 de la turbomachine sur le banc d'essais ;
(e) démontage 108 de la turbomachine.

Le capot test comprend avantageusement une couche de silicone recouvrant la surface interne de la paroi de sorte à isoler thermiquement la paroi.

Lors de l'étape (a) fourniture et/ou fabrication 100, la turbomachine peut comprendre un capot moteur de vol qui sera démonté au début de l'étape (b) montage 102 d'un capot moteur de test.

Le capot comprend une bride circulaire ou en arc de cercles à chaque extrémité amont et aval de la paroi, lors de l'étape (b) montage 102 au moins une ou chaque bride circulaire peut venir en contact, éventuellement circulaire, de la turbomachine, et/ou peut être fixé à la turbomachine. Le contact et/ou la fixation peut être contre une turbine, telle la turbine haute pression. Lors de l'étape (b) montage 102, la couche de silicone peut entourer la turbomachine sur la majorité de la longueur axiale de la paroi, préférentiellement sur toute sa longueur.

Lors de l'étape (c) fixation 104 de la turbomachine, le capot de test peut être fixé au banc d'essais. Eventuellement, le banc d'essais comprend un adaptateur avec des moyens de fixation qui coopèrent avec le capot de test.

Lors de l'étape (e) démontage 106, le capot de test est démonté et le capot de vol est remonté. Le capot de test peut être employé pour un autre essai sur une autre turbomachine, ou sur la même turbomachine pour un essai futur. En regard de l'invention, l'étape (e) démontage 106 est optionnelle, tout comme l'étape (a) fourniture et/ou fabrication 100. Plusieurs répétitions des étapes, (b) montage 102, (c) fixation 104, (d) test 106 peuvent être réalisées avant la fourniture d'une autre turbomachine. De même, plusieurs étapes (b) montage 102 peuvent être effectuées de suite ou au cours du procédé car plusieurs carters de test peuvent être montés le long de la turbomachine. Selon l'invention, il est également possible d'inverser l'ordre des étapes (b) montage 102 et (c) fixation 104 puisque le carter de test peut aussi bien être monté sur la turbomachine après qu'elle ait été fixée au banc d'essais.

## Revendications

1. Capot moteur de test (26) de turbomachine (4), destiné à remplacer un capot moteur de vol de la turbomachine (4) lors d'un test de la turbomachine (4) sur un banc d'essai (2), le capot de test comprenant une paroi (28) avec une surface externe (30) destinée à délimiter un flux annulaire (24) de la turbomachine (4) et une surface interne (38) opposée à la surface externe (30),
**caractérisé en ce qu'**il comprend en outre
une couche de silicone (42) recouvrant la surface interne (38) de la paroi (28) adaptée pour isoler thermiquement la paroi (28).

2. Capot (26) selon la revendication 1, **caractérisé en ce que** la paroi (28) est réalisée en un matériau composite à matrice organique telle une matrice époxydique, et avec des fibres de carbone et/ou des fibres de verre, le matériau composite comprend éventuellement une préforme stratifiée avec un empilement de plis fibreux.

3. Capot (26) selon l'une des revendications 1 à 2, **caractérisé en ce que** la couche de silicone (42) recouvre la majorité de la paroi (28), préférentiellement la paroi (28) est totalement recouverte, éventuellement par la couche de silicone (42).

4. Capot (26) selon l'une des revendications 1 à 3, **caractérisé en ce que** la couche de silicone (42) comprend au moins 30% préférentiellement au moins 50% en masse de polysiloxane.

5. Capot (26) selon l'une des revendications 1 à 4, **caractérisé en ce que** la couche de silicone (42) comprend du quartz, éventuellement moins de 20% massique, et/ou la couche de silicone (42) comprend des réticulants, éventuellement entre 2% et 20%.

6. Capot (26) selon l'une des revendications 1 à 5, **caractérisé en ce que** la paroi (28) est circulaire et est formée de deux demi-coquilles, le carter comprenant des brides axiales de fixation rapportées (44) destinées à être fixées l'une à l'autre, ou la paroi est formée d'un seul tenant ; éventuellement la paroi ou chaque demi-coquille est venue de matière.

7. Capot (26) selon l'une des revendications 1 à 6, **caractérisé en ce qu'**il comprend des capteurs (50), tels des capteurs de pression et/ou des capteurs de température, préférentiellement les capteurs (50) sont en contact de la couche de silicone (42).

8. Capot (26) selon l'une des revendications 1 à 7, **caractérisé en ce qu'**il comprend une bride circulaire ou en arc de cercle (32) à une extrémité axiale de la paroi (28), préférentiellement la bride (32) est en contact de la couche de silicone (42).

9. Capot (26) selon l'une des revendications 1 à 8, **caractérisé en ce que** la couche de silicone (42) présente une épaisseur comprise entre 1,00 mm et 10,00 mm, préférentiellement comprise entre 3,00 mm et 6,00 mm.

10. Procédé de test d'une turbomachine (4) sur un banc d'essais (2), notamment d'un turboréacteur ou d'un turbopropulseur, le procédé comprenant les étapes suivantes :
(b) montage (102) d'un capot moteur de test (26) sur la turbomachine, le capot de test comprenant une paroi (28) avec une surface interne (38) entourant la turbomachine (4);
(c) fixation (104) de la turbomachine (4) sur le banc d'essais (2) ;
(d) test (106) de la turbomachine (4) sur le banc d'essais (2) ;
**caractérisé en ce que** le capot de test comprend
une couche de silicone (42) recouvrant la surface interne (38) de la paroi (28) adaptée pour isoler thermiquement la paroi (28).

11. Procédé selon la revendication 10, **caractérisé en ce que** lors de l'étape (c) fixation (104) de la turbomachine (4), le capot de test (26) est fixé au banc d'essais (2), éventuellement le banc d'essais (2) comprend un adaptateur (8) avec des moyens de fixation qui coopèrent avec le capot de test (26).

12. Procédé selon l'une des revendications 10 à 11, **caractérisé en ce que** le capot de test (26) comprend une bride circulaire ou en arc de cercle (32) à chaque extrémité amont et aval de la paroi (28), lors de l'étape (b) montage (102) du capot de test au moins une ou chaque bride circulaire ou en arc de cercle (32) vient en contact, éventuellement circulaire, de la turbomachine (2).

13. Procédé selon l'une des revendications 10 à 12, **caractérisé en ce que** lors de l'étape (b) montage (102) du capot de test (26), la couche de silicone (42) entoure la turbomachine (4) sur la majorité de la longueur axiale de la paroi (28), préférentiellement sur toute sa longueur.

14. Utilisation du silicone pour isoler thermiquement la surface intérieure (38) d'une paroi (28) de capot moteur de test (26) de turbomachine (4), le capot étant selon l'une des revendications 1 à 9, lors du test de la turbomachine (4) sur un banc d'essais (2).

15. Utilisation selon la revendication 14, **caractérisée en ce que** le silicone comprend au moins 30% en masse de polysiloxane, et/ou du quartz.

## Patentansprüche

1. Testmotorabdeckung (26) einer Turbomaschine (4), die dazu bestimmt ist, eine Flugmotorabdeckung der Turbomaschine (4) bei einem Test der Turbomaschine (4) auf einem Versuchsstand (2) zu ersetzen, wobei die Testabdeckung eine Wand (28) mit einer äußeren Oberfläche (30) umfasst, die dazu bestimmt ist, einen ringförmigen Fluss (24) der Turbomaschine (4) zu begrenzen, und eine innere Oberfläche (38) gegenüber der äußeren Oberfläche (30), **dadurch gekennzeichnet, dass** sie weiterhin eine Silikonschicht (42) umfasst, die die innere Oberfläche (38) der Wand (28) bedeckt und dazu angepasst ist, die Wand (28) thermisch zu isolieren.

2. Abdeckung (26) gemäß Anspruch 1, **dadurch gekennzeichnet, dass** die Wand (28) aus einem Kompositmaterial mit einer organischen Matrix wie einer Epoxidmatrix gemacht ist und mit Kohlenstofffasern und/oder Glasfasern, wobei das Kompositmaterial möglicherweise eine geschichtete Vorform mit einem Stapel von faserigen Lagen umfasst.

3. Abdeckung (26) gemäß einem der Ansprüche 1 bis 2, **dadurch gekennzeichnet, dass** die Silikonschicht (42) den Großteil der Wand (28) bedeckt, vorzugsweise ist die Wand (28) vollständig bedeckt, möglicherweise durch die Silikonschicht (42).

4. Abdeckung (26) gemäß einem der Ansprüche 1 bis 3, **dadurch gekennzeichnet, dass** die Silikonschicht (42) mindestens 30 Massenprozent, vorzugsweise mindestens 50 Massenprozent Polysiloxan enthält.

5. Abdeckung (26) gemäß einem der Ansprüche 1 bis 4, **dadurch gekennzeichnet, dass** die Silikonschicht (42) Quarz enthält, möglicherweise weniger als 20 Massenprozent, und/oder dass die Silikonschicht (42) Vernetzer enthält, möglicherweise zwischen 2% und 20%.

6. Abdeckung (26) gemäß einem der Ansprüche 1 bis 5, **dadurch gekennzeichnet, dass** die Wand (28) kreisförmig ist und durch zwei Halbschalen gebildet ist, wobei das Gehäuse zwei angebaute axiale Befestigungsflansche (44) umfasst, die dazu bestimmt sind, aneinander befestigt zu werden, oder die Wand ist aus einem Stück, wobei die Wand oder jede Halbschale möglicherweise einstückig sind.

7. Abdeckung (26) gemäß einem der Ansprüche 1 bis 6, **dadurch gekennzeichnet, dass** sie Sensoren (50) umfasst wie Drucksensoren und/oder Temperatursensoren, wobei die Sensoren (50) vorzugsweise mit der Silikonschicht (42) in Kontakt sind.

8. Abdeckung (26) gemäß einem der Ansprüche 1 bis 7, **dadurch gekennzeichnet, dass** sie einen zirkularen oder einen kreisbogenförmigen Flansch (32) an einem axialen Ende der Wand (28) umfasst, wobei vorzugsweise der Flansch (32) mit der Silikonschicht (42) in Kontakt ist.

9. Abdeckung (26) gemäß einem der Ansprüche 1 bis 8, **dadurch gekennzeichnet, dass** die Silikonschicht (42) eine Dicke zwischen 1,00 mm und 10,00 mm hat, vorzugsweise zwischen 3,00 mm und 6,00 mm.

10. Verfahren zum Testen einer Turbomaschine (4) auf einem Versuchsstand (2), insbesondere eines Strahltreibwerks oder eines Turboprop-Triebwerks, wobei das Verfahren die Schritte umfasst des:
(b) Montage (102) einer Testmotorabdeckung (26) auf der Turbomaschine, wobei die Testabdeckung eine Wand (28) mit einer inneren Oberfläche (38) umfasst, die die Turbomaschine (4) umgibt,
(c) Befestigen (104) der Turbomaschine (4) auf dem Teststand (2);
(d) Testen (106) der Turbomaschine (4) auf dem Teststand (2);
**gekennzeichnet dadurch, dass** die Testabdeckung eine Silikonschicht (42) umfasst, die die innere Oberfläche (38) der Wand (28) bedeckt und dazu angepasst ist, die Wand (28) thermisch zu isolieren.

11. Verfahren gemäß Anspruch 10, **gekennzeichnet dadurch, dass** während des Schrittes (c) der Befestigung (104) der Turbomaschine (4) die Testabdeckung (26) auf dem Versuchsstand (2) befestigt ist, wobei der Versuchsstand (2) möglicherweise einen Adapter (8) mit Befestigungsmitteln umfasst, die mit der Testabdeckung (26) zusammenwirken.

12. Verfahren gemäß einem der Ansprüche 10 bis 11, **gekennzeichnet dadurch, dass** die Testabdeckung (26) einen zirkularen oder einen kreisbogenförmigen Flansch (32) an jedem stromaufwärtigen und stromabwärtigen Ende der Wand (28) umfasst, wobei während des Schrittes (b) der Montage (102) der Testabdeckung mindestens einer oder jeder zirkularer oder kreisbogenförmiger Flansch (32) mit der Turbomaschine (2) in Kontakt kommt, möglicherweise kreisförmig.

13. Verfahren gemäß einem der Ansprüche 10 bis 12, **dadurch gekennzeichnet, dass** während des Schrittes (b) der Montage (102) der Testabdeckung (26) die Silikonschicht (42) die Turbomaschine (4) über einen Großteil der axialen Länge der Wand (28) umgibt, vorzugsweise über die gesamte Länge.

14. Verwendung von Silikon um die innere Oberfläche (38) einer Wand (28) einer Testmotorabdeckung (26) einer Turbomaschine (4) während des Tests der Turbomaschine (4) auf einem Versuchsstand (2) thermisch zu isolieren, wobei die Testmotorabdeckung gemäß einem der Ansprüche 1 bis 9 ist.

15. Verwendung gemäß Anspruch 14, **gekennzeichnet dadurch, dass** das Silikon mindestens 30 Massenprozent Polysiloxan enthält und/oder Quarz.

## Claims

1. Test engine hood (26) for a turbine engine (4), intended to replace a flight engine hood of the turbine engine (4) during a test of the turbine engine (4) on a test bench (2), the test hood comprising a wall (28) with an outer surface (30) intended to delimit an annular flow (24) of the turbine engine (4) and an inner surface (38) opposite the outer surface (30),
**characterized in that** it also comprises
a silicone layer (42) covering the inner surface (38) of the wall (28) and able to insulate the wall (28) thermally.

2. Hood (26) according to claim 1, **characterized in that** the wall (28) is made of composite material with an organic matrix such as epoxy matrix, and with carbon fibres and/or glass fibres, eventually the composite material comprises a stratified preform with a stack of fibrous layers.

3. Hood (26) according to any of claims 1 to 2, **characterized in that** the silicone layer (42) covers the majority of the wall (28), preferably the wall (28) is fully covered, optionally by the silicone layer (42).

4. Hood (26) according to any of claims 1 to 3, **characterized in that** the silicone layer (42) comprises polysiloxane to at least 30%, preferably to at least 50% by mass.

5. Hood (26) according to any of claims 1 to 4, **characterized in that** the silicone layer (42) comprises quartz, optionally to less than 20% by mass and/or the silicone layer (42) comprises reticulants, optionally between 2% and 20%.

6. Hood (26) according to any of claims 1 to 5, **characterized in that** the wall (28) is circular and is formed by two half-shells, the casing comprising attached axial fixing flanges (44) intended to be fixed to each other, or the wall is formed integrally; eventually the wall or each half-shell are made integral.

7. Hood (26) according to any of claims 1 to 6, **characterized in that** it comprises sensors (50) such as pressure sensors and/or temperature sensors, preferably the sensors (50) are in contact with the silicone layer (42).

8. Hood (26) according to any of claims 1 to 7, **characterized in that** it comprises a circular or arcuate flange (32) at an axial end of the wall (28), preferably the flange (32) is in contact with the silicone layer (42).

9. Hood (26) according to any of claims 1 to 8, **characterized in that** the silicone layer (42) has a thickness between 1.00 mm and 10.00 mm, preferably between 3.00 mm and 6.00 mm.

10. Method for testing a turbine engine (4) on a test bench (2), in particular a turbojet or a turboprop engine, the method comprising the following steps:
(b) mounting (102) of a test engine hood (26) on the turbine engine, the test hood comprising a wall (28) with an inner surface (38) surrounding the turbine engine (4);
(c) fixing (104) of the turbine engine (4) to the test bench (2);
(d) testing (106) of the turbine engine (4) on the test bench (2);
**characterized in that** the test hood comprises
a silicone layer (42) covering the inner surface (38) of the wall (28) and able to insulate the wall (28) thermally.

11. Method according to claim 10, **characterized in that** during step (c), fixing (104) of the turbine engine (4), the test hood (26) is fixed to the test bench (2), optionally the test bench (2) comprises an adapter (8) with fixing means which cooperate with the test hood (26).

12. Method according to one of claims 10 to 11, **characterized in that** the test hood (26) comprises a circular or arcuate flange (32) at each upstream and downstream end of the wall (28), during step (b), mounting (102) of the test hood, at least one or each circular or arcuate flange (32) comes into contact, optionally circular contact, with the turbine engine (2).

13. Method according to one of claims 10 to 12, **characterized in that** during step (b), mounting (102) of the test hood (26), the silicone layer (42) surrounds the turbine engine (4) over the majority of the axial length of the wall (28), preferably over the its entire length.

14. Use of silicone for thermal insulation of the inner surface (38) of a wall (28) of a test engine hood (26) of the turbine engine (4) during testing of the turbine engine (4) on a test bench (2), the test engine hood (26) being according to one of claims 1 to 9.

15. Use according to claim 14, **characterized in that** the silicone comprises polysiloxane to at least 30% by mass and/or quartz.
